# EUROPEAN PATENT APPLICATION

(11) **EP 3 904 458 A1**
(43) Date of publication of application: **03.11.2021**
(21) Application number: 19904545.1
(22) Date of filing: 27.12.2019
(51) Int. Cl.: C08L 97/00, C08H 7/00, C08H 8/00, C07G 1/00, C09J 197/00, C08G 8/34, C08L 67/06, C08L 61/10, C08L 61/14, C09D 161/14, D06M 15/41, B22C 1/22

(54) **RESOLE PHENOLIC RESINS, PROCESSES OF SYNTHESIS OF SAID RESINS AND USE THEREOF**

(30) Priority: 28.12.2018 BR 102018077399
(71) Applicant: Suzano S.A., 41810-012 Pituba, Salvador, BA (BR)
(72) Inventor: ADRIANO SARAIVA, Sergio, 08613-900 Suzano, SP (BR); BISAN, Daniel, 08730-800 Mogi das Cruzes, SP (BR)
(74) Representative: Gerbino, Angelo
(86) International application number: PCT/BR2019/050571
(87) International publication number: WO 2020/132738

(57) **Abstract**

The present invention relates to resole-type phenolic resin synthesis processes using lignin, to resole-type phenolic resins comprising aldehyde, lignin, a base, urea, and optionally phenol, as well as to the use of said phenolic resins for application as an adhesive.

## Description

### FIELD OF THE INVENTION

The present invention relates to resole-type phenolic resin synthesis processes using lignin, to resole-type phenolic resins comprising lignin, and to the use of said phenolic resins.

### BACKGROUND OF THE INVENTION

There are different types of phenolic resins, the main ones being called resole and novolac. The first one is synthesized under alkaline conditions and with a stoichiometric excess of aldehyde, while the second one is synthesized with acid catalysis and a sub-stoichiometric amount of aldehyde. Phenolic resins are used in several sectors, being a material that has different properties according to the synthesis conditions, such as the aldehyde/phenol molar ratio or the extent of condensation that generates polymers with different molecular weights.

As described in the document titled "Characterization of a Novolac Resin Substituting Phenol by Ammonium Lignosulfonate as Filler or Extent", Perez et. *al,* BioResouce, due to the increase in the cost of the phenol monomer, researches have been developed in order to partially substitute this monomer by natural polymers showing structures similar to the resin without modifying its properties. One of the possible substituents is lignin, a polydispersed natural polymer composed mainly of phenyl propane units and which has a structure close to that of phenolic resin.

In addition to the economic factor, it is known that the demand for environmental sustainability and, as a result, for materials from renewable and/or biodegradable sources has increased at a very significant rate in recent years. In this context, it is important to note that lignin is a component of renewable origin.

Lignin is readily available as a by-product of the pulp and paper industry and is considered a promising phenol substitute in phenol-aldehyde resin syntheses, given the growing concerns about the storage of fossil resources and the environmental impact of petroleum-based products.

Lignin, which is obtained from different sources and/or processes, is a macromolecule derived from monomers with phenolic structures (p-coumaryl alcohol, coniferyl alcohol and synaphyl alcohol) and several prior art documents already present studies on the substitution of phenol by this raw material of renewable origin. Although this application has been described in the literature, there is a limitation in the phenol substitution content, due to the lower reactivity of lignin from hindered positions in the aromatic ring. The lignin monomer has fewer reactive areas than the phenol ring itself.

In order to overcome this limitation, different researches/prior art documents focus on methods to increase the reactivity of lignin, such as, for example, technology known as CatLignin, lignin hydroxymethylation, phenolation, demethylation, among other methods to make lignin better suited to react with formaldehyde during the synthesis of a resole-type resin. Examples of these documents are paper "Methods to improve lignin's reactivity as a phenol substitute and as replacement for other phenolic compounds: A brief review" and international publication WO 2013/144454.

Document titled "Methods to improve lignin's reactivity as a phenol substitute and as replacement for other phenolic compounds: A brief review", Hu et al., Bioresources, describes methods to improve the reactivity of lignin as a phenol substitute and as a replacement for other phenolic compounds. Among the methods described in said document, there are hydroxymethylation (or methyolation), phenolation and demethylation. Other methods, including reduction, oxidation and hydrolysis, have also been studied to improve the reactivity of lignin and to produce phenolic compounds from lignin. Said document also states that the interest in the use of lignin as a phenol substitute in phenolic resins has been motivated by the large amount of biomass containing lignin - particularly when available as a low-cost by-product of the pulping process -, by the high price of phenol and, more recently, by environmental considerations.

WO 2013/144454 describes a method for increasing the reactivity of lignin, as well as the use of the lignin thus obtained to replace at least part of the amount of synthetic materials used during the production of a binder composition. The method for increasing the reactivity of lignin comprises two distinct steps. In step (a), an aqueous dispersion is formed comprising alkali and lignin, wherein the alkali comprises an alkali metal hydroxide. In step (b), the dispersion formed in step (a) is heated to produce alkaline lignin. This document discusses very generally a method to produce a binder composition with the lignin addressed in the invention - a composition used in adhesive applications - , and presents temperature (60 to 95°C, preferably 65 to 95°C, more preferably 75 to 85°C) and viscosity (40 to 250 cP/250 to 1500 cP) operating ranges.

Despite the limitations of lignin in terms of reactivity when compared to phenol, lignin is more reactive than many natural compounds. In this context, as described in document "Contribution to the study of hydroxymetylation reaction of alkalilignin", Malutan et al., Bioresources, lignin is a macromolecular compound much more reactive than cellulose or other natural polymers from the chemical point of view, due to its functional groups. The reactivity of lignin is determined both by its particular structure with specific functional groups and by its structural modifications induced by separation methods used for different raw materials. The presence of (phenolic and aliphatic) hydroxy groups in lignin has enabled its use as a partial phenol substitute in the synthesis of products with various applications.

For phenolic resins, the substitution of phenol by lignin poses a great technical challenge, since the reactivity of lignin is much lower than that of phenol due to the hindered positions in the aromatic ring.

In this scenario, there are prior art documents that present studies on the substitution of phenol by lignin, which address the use of lignin in the synthesis of phenolic resins and/or lignin-containing phenolic resins.

An example is the document titled "Kraft lignin in phenol formaldehyde resin. *Part 1*. Partial replacement of phenol by kraft lignin in phenol formaldehyde adhesives for plywood", Danielson and Simonson, J. Adhesion Science Tech. This paper describes a study that investigated the potential of softwood kraft lignin in the partial substitution of phenol in a formaldehyde-phenol resin, a resin used as an adhesive in the production of plywood. However, the process of replacing phenol with lignin described in that paper is different from those described herein. In this paper, the lignin cake is previously diluted in caustic soda and this dilution is charged into the phenolformaldehyde mixture, wherein the reaction is carried out in three isothermal steps: 60°C / 85°C / 75°C.

US 5,010,156 describes a resin formed from organosolv lignin, phenol and formaldehyde, which can be applied as an adhesive for particulate wood products. It further describes a method for preparing said resin. The organosolv lignin used in this document is hardwood organosolv lignin. The described process is performed in two steps. The first step of the process lasts between 30 and 90 minutes and employs a temperature in the range of 75 and 90°C. The second step of the process, on the other hand, is performed over the same period of time, but employs a temperature in a lower range of 60 and 75°C. When formaldehyde is added to the organosolv lignin solution in the first step of the process, only a fraction of the total formaldehyde charge is added, preferably about 10 to 20%. The remaining formaldehyde is then added when the phenol is introduced in the second step of the process. In the examples described in said document, a viscosity control is performed during the synthesis process to ensure that the final resin obtained is within the desired specifications.

Despite efforts to replace phenol with lignin, no large-scale application in the industry is known due to technical, economic or process issues.

Even though there are documents addressing the use of lignin in the synthesis of phenolic resins, the prior art does not describe modifications to the resole production process so that the use of lignin becomes industrially viable, while outputting environmentally-friendly resins.

There is a need in the state of the art for phenolic resin synthesis processes that are industrially viable, more cost-effective and that generate environmentally-friendly resins. There is also a need for environmentally-friendly resins for use as wood adhesives. Thus, the present invention addresses a process for the synthesis of resole-type phenol-lignin-aldehyde or lignin-aldehyde resins, in order to generate a product within market specifications and that is economically, environmentally and industrially viable.

### SUMMARY OF THE INVENTION

A first resole-type phenolic resin synthesis process is described herein, wherein 1 to 99% of phenol is substituted by lignin, the process comprising the steps of:
a) mixing phenol, lignin and optionally aldehyde at a temperature range of 25 to 60°C until fully homogenized;
b) adding a catalyst;
c) adding aldehyde until it reaches a temperature of 45 to 95 °C;
d) keeping the obtained product at a temperature of 45 to 95 °C;
e) adding catalyst to the obtained product;
f) keeping the obtained product at a temperature ranging from 45 to 95 °C;
g) adjusting the temperature of the obtained product to 40 to 70 °C;
h) optionally adding a catalyst;
i) adding urea;
j) optionally keeping the obtained product at a temperature of 40 to 70 °C; and
k) cooling to room temperature.

In one embodiment of the invention, catalyst addition step (b) is performed until a temperature of 85 to 95°C is reached.

When mixing step (a) comprises aldehyde and catalyst addition step (b) is performed until a temperature of 85 to 95°C is reached, the first process comprises a step of cooling the product obtained after step (b) to a temperature of 50 to 75°C, preferably to 65°C. After this cooling step, a catalyst is added until a temperature of 65 to 95°C is reached, preferably until a temperature of 85°C.

In another embodiment of the invention, catalyst addition step (b) is performed along with step (a). In this embodiment, there is no addition of aldehyde in the mixture of step (a).

In one embodiment of the invention, the first phenolic resin synthesis process further comprises the addition of glycol.

In one embodiment of the invention, glycol is added to the mixture of step (a) of the first phenolic resin synthesis process or immediately after that step.

In another embodiment of the invention, glycol is added at the end of the first phenolic resin synthesis process (after step (k)).

In one embodiment of the invention, a fraction of the total glycol is added along with the mixture of step (a) of the first phenolic resin synthesis process or immediately after that step and the other fraction of the total glycol is added at the end (after step (k)) of the first phenolic resin synthesis process.

In one embodiment of the invention, the first phenolic resin synthesis process further comprises the addition of water.

The addition of water during the first synthesis process of the present invention has the purpose of adjusting the solids content of the obtained product at the end of the process, for example, by diluting a component of the process or adjusting the system's temperature.

In one embodiment of the invention, water is added in steps (a), (b), (c), (e), (g), (h), (i) and/or after step (i) and/or (k).

In a preferred embodiment of the invention, when water is added in step (a), it has the purpose of diluting the aldehyde - when it is added in two stages in the process. Preferably, 5 to 50% of the total aldehyde added to the process is diluted in 50 to 80% of the total amount of water added to the first process.

In a more preferred embodiment, the dilution of the aldehyde in step (a) of the first phenolic resin synthesis process occurs at a temperature of 50°C.

In a preferred embodiment of the invention, a temperature of 90°C is reached in step (b) of the first phenolic resin synthesis process.

In an embodiment of the invention, an amount of 15 to 50% of the total amount of catalyst added to the first phenolic resin synthesis process is added in step (b) and in the optional catalyst addition step after cooling, which is also optional, of the product obtained after step (b).

In a preferred embodiment of the invention, a temperature of 85°C is reached in step (c) of the first phenolic resin synthesis process.

In an embodiment of the invention, step (c) of the first phenolic resin synthesis process comprises the addition of 50 to 100% of the total amount of aldehyde added to the first process.

In a preferred embodiment of the invention, the product obtained in step (c) of the first phenolic resin synthesis process is kept at a temperature of 85°C.

In one embodiment of the invention, in step (d) of the first phenolic resin synthesis process, a Ford 4 Cup viscosity of 10 to 20 seconds is obtained at a temperature of 85°C.

In one embodiment of the invention, step (e) of the first phenolic resin synthesis process comprises adding 20 to 50% of water and 10 to 20% of catalyst, with respect to the total amount of water and catalyst added to the process.

In one embodiment of the invention, the catalyst used in the first phenolic resin synthesis process is a base. In a preferred embodiment, the base is selected from sodium hydroxide, potassium hydroxide, and sodium carbonate. More preferably, the base is sodium hydroxide.

In a preferred embodiment of the invention, the product obtained in step (e) of the first phenolic resin synthesis process is kept at a temperature of 85°C.

In one embodiment of the invention, in step (f) of the first phenolic resin synthesis process, a Ford 4 Cup viscosity of 25 to 40 seconds is obtained at a temperature of 85°C.

In an embodiment of the invention, step (f) of the first phenolic resin synthesis process is kept under temperature until the curing on the heating plate at 150°C is from 5 to 150 seconds.

In a preferred embodiment of the invention, the temperature is adjusted to 65°C in step (g) of the first phenolic resin synthesis process.

In a preferred embodiment of the invention, step (i) of the first phenolic resin synthesis process comprises adding 1 to 20% of urea.

In an embodiment of the invention, the aldehyde/phenol molar ratio is 25 1.0 to 3.5.

In a preferred embodiment of the invention, phenol is partially substituted by lignin in mass percentages.

In one embodiment of the invention, the lignin used in the first phenolic resin synthesis process is in the form of powder or cake.

Also described herein is a second resole-type phenolic resin synthesis process, wherein 100% of the phenol is substituted by lignin, the process comprising the steps of:
a) diluting a catalyst in water, at a temperature range of 25 to 60 °C;
b) adding lignin at a temperature between 20 and 95 °C;
c) cooling the product obtained to a temperature of 50 to 75 °C;
d) adding aldehyde at a temperature of 50 to 85 °C;
e) keeping the obtained product at a temperature of 60 to 95 °C;
f) adding a catalyst;
g) keeping the obtained product at a temperature ranging from 60 to 95 °C;
h) adjusting the temperature of the obtained product to 40 to 70 °C;
i) adding urea;
j) keeping the obtained product at a temperature of 40 to 70 °C; and
k) cooling to room temperature.

In one embodiment of the invention, the second phenolic resin synthesis process further comprises a step of adding glycol.

In one embodiment of the invention, glycol is added after step (a) of the second phenolic resin synthesis process.

In another embodiment of the invention, glycol is added at the end of the second phenolic resin synthesis process (after step (k)).

In one embodiment of the invention, a fraction of the total glycol is added after step (a) of the phenolic resin synthesis process and the other fraction of the total glycol is added at the end (after step (k)) of the second phenolic resin synthesis process.

In a preferred embodiment of the invention, the dilution step (a) of the second phenolic resin synthesis process occurs at a temperature of 50°C.

In one embodiment of the invention, the dilution step (a) of the second phenolic resin synthesis process comprises diluting 50 to 90% of the total amount of catalyst added to the process in 100% of the amount of water added to the process.

In a preferred embodiment of the invention, step (b) of the second phenolic resin synthesis process occurs at a temperature of 60°C.

In a preferred embodiment of the invention, the product is cooled in step (c) of the second phenolic resin synthesis process to a temperature of 65°C.

In a preferred embodiment of the invention, the aldehyde is added in step (d) of the second phenolic resin synthesis process at a temperature of 70°C.

In a preferred embodiment of the invention, the product obtained in step (d) of the second phenolic resin synthesis process is kept at a temperature of 85°C.

In one embodiment of the invention, in step (e) of the second phenolic resin synthesis process, a Ford 4 Cup viscosity of 15 to 30 seconds is obtained at a temperature of 85°C.

In a preferred embodiment of the invention, step (f) comprises adding from 10 to 50% of the total amount of catalyst added to the process to the product obtained in step (e) of the second phenolic resin synthesis process.

In one embodiment of the invention, the catalyst used in the second phenolic resin synthesis process is a base. In a preferred embodiment, the base is selected from sodium hydroxide, potassium hydroxide, and sodium carbonate. More preferably, the base is sodium hydroxide.

In a preferred embodiment of the invention, the product obtained in step (f) of the second phenolic resin synthesis process is kept at a temperature of 85°C.

In one embodiment of the invention, in step (g) of the second phenolic resin synthesis process, a Ford 4 Cup viscosity of 25 to 40 seconds is obtained at a temperature of 85°C.

In a preferred embodiment of the invention, the temperature is adjusted to 65°C in step (h) of the second phenolic resin synthesis process.

In a preferred embodiment of the invention, step (i) of the second phenolic resin synthesis process comprises adding 1 to 20% of urea to the product of step (h).

In one embodiment of the invention, the aldehyde added to the resole-type phenolic resin synthesis processes of the present invention is selected from formic aldehyde (formaldehyde or formalin), acetaldehyde, glyoxal, furfuraldehyde, propinaldehyde, butyraldehyde, isobutyraldehyde, pentanal, and paraformaldehyde, among others. In a more preferred embodiment, the aldehyde is formaldehyde.

In one embodiment of the invention, the lignin used in the second phenolic resin synthesis process is in the form of powder or cake.

Also described herein is a phenolic resin comprising aldehyde, lignin, a base, urea, and optionally phenol.

In one embodiment of the invention, the phenolic resin comprises 0 to 60% of phenol, 30 to 80% of aldehyde, 5 to 60% of lignin, 5 to 20% of a base and 1 to 20% of urea.

In one embodiment of the invention, the base is selected from sodium hydroxide, potassium hydroxide, and sodium carbonate. More preferably, the base is sodium hydroxide.

In one embodiment of the invention, the phenolic resin further comprises glycol.

In a preferred embodiment of the invention, the phenolic resin comprises 1 to 25% glycol.

In one embodiment of the invention, the phenolic resin has a viscosity of between 400 and 1100 mPa·s (400 and 1100 cP).

In one embodiment of the invention, the phenolic resin has a pH of between 9.0 and 14.0.

In one embodiment of the invention, the phenolic resin has a gel time at 121°C of between 6-11 minutes.

In one embodiment, the phenolic resin of the invention can be used as an adhesive.

In one embodiment of the invention, the adhesive is used on wood substrates.

In one embodiment of the invention, the adhesive is used on wood boards, such as plywood, MDF, MDP and OSB.

The use of the phenolic resin of the invention for application as an adhesive is also disclosed.

In one embodiment of the invention, the use of the phenolic resin of the invention is for application as an adhesive, where the adhesive is for application on wood substrates.

In one embodiment of the invention, the use of the phenolic resin of the invention is for application as an adhesive, wherein the adhesive is used on wood boards, such as plywood, MDF, MDP and OSB.

### BRIEF DESCRIPTION OF THE DRAWINGS

Figure 1 represents the generic chemical structure assumed for lignin.
Figure 2 represents a chart, of example 6 of the invention, of shear strength versus type of treatment for a (lignin-free) commercial resin and for a lignin-containing resin according to the present invention.
Figure 03 represents a chart, of example 6 of the invention, of shear strength versus type of treatment for different resins.

### DETAILED DESCRIPTION OF THE INVENTION

The present invention relates to processes for the synthesis of resole-type phenolic resins containing lignin, the resole-type phenolic resins comprising lignin produced by alkaline catalysis, and to the use of said phenolic resins.

The present invention addresses processes for the synthesis of phenol-lignin-aldehyde or lignin-aldehyde resins in order to generate a product within market specifications, but differently from the prior art documents, which do not describe changes in the resole production process so that the use of lignin becomes industrially viable. Furthermore, the product generated by the synthesis process of the present invention - phenolic resin - is environmentally friendly compared with those existing on the market.

The present invention presents methods in which some components are added, such as aldehyde, water and the basic catalyst (first process) or only the basic catalyst (second process) in specific steps and temperatures, promoting the formation of phenol-lignin-aldehyde type or lignin-aldehyde type resins with different molecular weights.

In the first resole-type phenolic resin synthesis process of the present invention, the phenol is partially substituted by lignin in different mass percentages (from 1 to 99%). Said phenolic resin synthesis process comprises the steps of:
a) mixing phenol, lignin and optionally aldehyde at a temperature range of 25 to 60°C until fully homogenized;
b) adding a catalyst;
c) adding aldehyde until it reaches a temperature of 45 to 95 °C;
d) keeping the obtained product at a temperature of 45 to 95 °C;
e) adding catalyst to the obtained product;
f) keeping the obtained product at a temperature ranging from 45 to 95 °C;
g) adjusting the temperature of the obtained product to 40 to 70 °C;
h) optionally adding a catalyst;
i) adding urea;
j) optionally keeping the obtained product at a temperature of 40 to 70 °C; and
k) cooling to room temperature.

In one embodiment of the invention, catalyst addition step (b) is performed until a temperature of 85 to 95°C is reached.

When mixing step (a) comprises aldehyde and catalyst addition step (b) is performed until a temperature of 85 to 95°C is reached, the first process comprises a step of cooling the product obtained after step (b) to a temperature of 50 to 75°C, preferably to 65°C. After this cooling step, a catalyst is added until a temperature of 65 to 95°C is reached, preferably until a temperature of 85°C.

In another embodiment of the invention, catalyst addition step (b) is performed along with step (a). In this embodiment, there is no addition of aldehyde in the mixture of step (a).

In one embodiment of the invention, the first phenolic resin synthesis process further comprises a step of adding glycol.

In one embodiment of the invention, glycol is added to the mixture of step (a) of the first phenolic resin synthesis process or immediately after that step.

In another embodiment of the invention, glycol is added at the end of the first phenolic resin synthesis process (after step (k)).

In one embodiment of the invention, a fraction of the total glycol is added along with the mixture of step (a) of the first phenolic resin synthesis process or immediately after that step and the other fraction of the total glycol is added at the end (after step (k)) of the first phenolic resin synthesis process.

In one embodiment of the invention, the first phenolic resin synthesis process further comprises the addition of water.

The addition of water during the first synthesis process of the present invention has the purpose of adjusting the solids content of the obtained product at the end of the process, for example, by diluting a component of the process or adjusting the system's temperature.

In one embodiment of the invention, water is added in steps (a), (b), (c), (e), (g), (h), (i) and/or after step (i) and/or (k).

In a preferred embodiment of the invention, when water is added in step (a), it has the purpose of diluting the aldehyde - when it is added in two stages in the process. Preferably, 5 to 50% of the total aldehyde added to the process is diluted in 50 to 80% of the total amount of water added to the first process.

In a more preferred embodiment, the dilution of the aldehyde in step (a) of the first phenolic resin synthesis process occurs at a temperature of 50°C.

In a preferred embodiment of the invention, a temperature of 90°C is reached in step (b) of the first phenolic resin synthesis process.

In an embodiment of the invention, an amount of 15 to 50% of the total amount of catalyst added to the first phenolic resin synthesis process is added in step (b) and in the optional catalyst addition step after cooling, which is also optional, of the product obtained after step (b).

In a preferred embodiment of the invention, a temperature of 85°C is reached in step (c) of the first phenolic resin synthesis process.

In an embodiment of the invention, step (c) of the first phenolic resin synthesis process comprises the addition of 50 to 100% of the total amount of aldehyde added to the first process.

In a preferred embodiment of the invention, the product obtained in step (c) of the first phenolic resin synthesis process is kept at a temperature of 85°C.

In one embodiment of the invention, in step (d) of the first phenolic resin synthesis process, a Ford 4 Cup viscosity of 10 to 20 seconds is obtained at a temperature of 85°C.

In one embodiment of the invention, step (e) of the first phenolic resin synthesis process comprises adding 20 to 50% of water and 10 to 20% of catalyst, with respect to the total amount of water and catalyst added to the process.

In one embodiment of the invention, the catalyst used in the first phenolic resin synthesis process is a base. In a preferred embodiment, the base is selected from sodium hydroxide, potassium hydroxide, and sodium carbonate. More preferably, the base is sodium hydroxide.

In a preferred embodiment of the invention, the product obtained in step (e) of the first phenolic resin synthesis process is kept at a temperature of 85°C.

In one embodiment of the invention, in step (f) of the first phenolic resin synthesis process, a Ford 4 Cup viscosity of 25 to 40 seconds is obtained at a temperature of 85°C.

In an embodiment of the invention, step (f) of the first phenolic resin synthesis process is kept under temperature until the curing on the heating plate at 150°C is from 5 to 150 seconds.

The curing time is defined as the time (expressed in seconds) required for the resin that is kept under a hot surface - at a certain temperature - and stirred with a spatula, to polymerize from thermoplastic to thermoset (visual assessment).

In a preferred embodiment of the invention, the temperature is adjusted to 65°C in step (g) of the first phenolic resin synthesis process.

In a preferred embodiment of the invention, step (i) of the first phenolic resin synthesis process comprises adding 1 to 20% of urea.

In a preferred embodiment of the invention, the first phenolic resin synthesis process comprises the steps of:
a) diluting 5 to 50% of the total amount of aldehyde added to the process in 50 to 80% of the total amount of water added to the process, at a temperature range of 25 to 60°C, preferably 50°C, and mixing the lignin and the phenol until fully homogenized;
b) optionally adding all or part of the total glycol;
c) adding 15 to 50% of the total catalyst, until a temperature of 85 to 95°C is reached, preferably 90°C;
d) cooling the obtained product to a temperature of 50 to 75°C, preferably 65°C;
e) adding 15 to 50% of catalyst of the total amount added to the process, until a temperature of 65 to 95°C is reached, preferably 85°C;
f) adding 50 to 95% of aldehyde of the total amount added to the process until it reaches a temperature of 60 to 95°C, preferably 85°C;
g) keeping the obtained product at a temperature of 60 to 95°C, preferably 85°C, until a Ford 4 Cup viscosity of 10 to 20 seconds, at a temperature of 85°C;
h) adding 20 to 50% of water and 10 to 20% of catalyst to the product obtained in step (g) with respect to the total amount of water and catalyst added to the process;
i) keeping the obtained product at a temperature ranging from 60 to 95°C, preferably 85°C until a Ford 4 Cup viscosity of 25 to 40 seconds, at a temperature of 85°C;
j) adjusting the temperature of the obtained product to 40 to 70°C, preferably 65°C;
k) adding 1 to 20% of urea;
l) keeping the obtained product at a temperature of 40 to 70°C;
m) cooling to room temperature; and
n) optionally adding all or the remainder of the total glycol.

The catalyst used is a base selected from sodium hydroxide, potassium hydroxide, and sodium carbonate. More preferably, the catalyst is sodium hydroxide.

In the second phenolic resin synthesis process of the present invention, phenol is 100% substituted by lignin. Said phenolic resin synthesis process comprises the steps of:
a) diluting a catalyst in water, at a temperature range of 25 to 60 °C;
b) adding lignin at a temperature between 20 and 95 °C;
c) cooling the product obtained to a temperature of 50 to 75 °C;
d) adding aldehyde at a temperature of 50 to 85 °C;
e) keeping the obtained product at a temperature of 60 to 95 °C;
f) adding a catalyst;
g) keeping the obtained product at a temperature ranging from 60 to 95 °C;
h) adjusting the temperature of the obtained product to 40 to 70 °C;
i) adding urea;
j) keeping the obtained product at a temperature of 40 to 70 °C; and
k) cooling to room temperature.

In one embodiment of the invention, the second phenolic resin synthesis process further comprises a step of adding glycol.

In one embodiment of the invention, glycol is added after the step of the second phenolic resin synthesis process.

In another embodiment of the invention, glycol is added at the end of the second phenolic resin synthesis process (after step (k)).

In one embodiment of the invention, a fraction of the total amount of glycol is added after step (a) of the second phenolic resin synthesis process and the other fraction of the total glycol is added at the end of the second phenolic resin synthesis process (after step (k)).

In a preferred embodiment of the invention, the dilution step (a) of the second phenolic resin synthesis process occurs at a temperature of 50°C.

In one embodiment of the invention, the dilution step (a) of the second phenolic resin synthesis process comprises diluting 50 to 90% of the total amount of catalyst added to the process in 100% of the amount of water added to the process.

In a preferred embodiment of the invention, the dilution step (a) of the second phenolic resin synthesis process occurs at a temperature of 60°C.

In a preferred embodiment of the invention, the product is cooled in step (c) of the second phenolic resin synthesis process to a temperature of 65°C.

In a preferred embodiment of the invention, the aldehyde is added in step (d) of the second phenolic resin synthesis process at a temperature of 70°C.

In a preferred embodiment of the invention, the product obtained in step (e) of the second phenolic resin synthesis process is kept at a temperature of 85°C.

In one embodiment of the invention, in step (e) of the second phenolic resin synthesis process, a Ford 4 Cup viscosity of 15 to 30 seconds is obtained at a temperature of 85°C.

In a preferred embodiment of the invention, step (f) comprises adding 10 to 50% of the total amount of catalyst added to the process to the product obtained in step (e) of the second phenolic resin synthesis process.

The catalyst used in the second phenolic resin synthesis process is a base selected from sodium hydroxide, potassium hydroxide, and sodium carbonate. More preferably, the catalyst is sodium hydroxide.

In a preferred embodiment of the invention, the product obtained in step (f) of the second phenolic resin synthesis process is kept at a temperature of 85°C.

In one embodiment of the invention, in step (g) of the second phenolic resin synthesis process, a Ford 4 Cup viscosity of 25 to 40 seconds is obtained at a temperature of 85°C.

In a preferred embodiment of the invention, the temperature is adjusted to 65°C in step (h) of the second phenolic resin synthesis process.

In a preferred embodiment of the invention, step (i) of the second phenolic resin synthesis process comprises adding 1 to 20% of urea to the product of step (h).

In a preferred embodiment of the invention, the first phenolic resin synthesis process comprises the steps of:
a) diluting 50 to 90% of the total amount of basic catalyst added to the process in 100% of the amount of water, at a temperature range of 25 to 60°C, preferably 50°C;
b) optionally adding all or a fraction of the total glycol;
c) adding lignin at a temperature between 20 and 95°C, preferably 60°C;
d) cooling the obtained product to a temperature of 50 to 75°C, preferably 65°C;
e) adding aldehyde at a temperature of 50 to 85°C, preferably 70°C;
f) keeping the obtained product at a temperature of 60 to 95°C, preferably 85°C, until a Ford 4 Cup viscosity of 15 to 30 seconds, at a temperature of 85°C;
g) adding 10 to 50% of basic catalyst to the product obtained in step (f);
h) keeping the obtained product at a temperature ranging from 60 to 95°C, preferably 85°C until a Ford 4 Cup viscosity of 25 to 40 seconds, at a temperature of 85°C;
i) adjusting the temperature of the obtained product to 40 to 70°C, preferably 65°C;
j) adding 1 to 20% of urea;
k) keeping the obtained product at a temperature of 40 to 70°C;
l) cooling to room temperature; and
m) optionally adding all or the remainder of the total glycol.

The basic catalyst used is a base selected from sodium hydroxide, potassium hydroxide, and sodium carbonate.

In phenolic resin synthesis processes in which phenol is partially substituted, such as in the first process of the present invention, the aldehyde/phenol molar ratio, i.e., the ratio between these two reagents in number of moles is an important feature. In one embodiment of the invention, the aldehyde/phenol molar ratio is 1.0 to 3.5, for the first phenolic resin synthesis process of the invention.

The aldehyde added to the resole-type phenolic resin synthesis processes of the present invention is selected from formic aldehyde (formaldehyde or formalin), acetaldehyde, glyoxal, furfuraldehyde, propinaldehyde, butyraldehyde, isobutyraldehyde, pentanal, and paraformaldehyde, among others. In a preferred embodiment, the aldehyde is formaldehyde.

The addition of glycol in the two phenolic resin synthesis processes disclosed herein is optional. Glycol functions as a charge to increase solids and improve the penetration of the resin into the wood, so that it can be added in two parts (50% at the start and 50% when the resin is finished).

In the two phenolic resin synthesis processes disclosed herein, it is possible to use lignin in the form of powder or cake, the latter being obtained by the extraction process and without a drying process. In the case where lignin cake is used, the lignin content present is considered and the water moisture contained in the raw material is deducted from the total water value that must be included in the system.

Any type of lignin can be used in the compositions of the invention, such as, for example, lignin from hardwood, softwood or grasses and extracted from any pulping process. Preferably, lignin obtained by the kraft process is used.

Catalyst, aldehyde and water are added in steps in the first process of the invention in order to establish the formation of different sizes of polymers with different molecular weights. In the second process, in turn, only the catalyst is added in steps. As in the first process, the stepwise addition of the catalyst in the second process also allows the formation of different sizes of polymers with different molecular weights, although with less variation in distribution. Molecules with lower molecular weight facilitate the penetration of resin into the wood, while molecules with higher molecular weight remain on the surface creating a barrier and functioning as a bonding interface between the particles.

In the phenolic resin synthesis process of the present invention, there is a production control in order for the obtained resin to always reach the same desired specification.

Also described herein is a phenolic resin comprising aldehyde, lignin, a base, urea, and optionally phenol.

Resole-type "phenolic resins" are defined as thermoplastic resins obtained by polycondensation of aldehyde and phenol (or a derivative thereof, cresol, resorcinol, xylenol, etc.) and which become thermoset after the addition of the curing agent and temperature adaptation.

Lignin can be defined, technically, as an amorphous material derived from dehydrogenative reactions of three types of phenylpropanoids: transconiferyl (G type), trans-synaphyl (S type) and trans-pcumaryl (H type) alcohols), which can be connected in different ways by covalent bonds, with no repetitive unit (feature of polymers), but a complex arrangement of such precursor units that generate macromolecules.

Like all natural matter, lignin presents substantial differences in its composition, structure and purity, which affect its properties and, as a result, its application potentials. Such variations depend on the botanical origin, since the ratio of the generating units (H/G/S) changes according to the plant type. For example, this ratio is 0-5/95-100/0 in softwood, 0-8/25-50/46-75 in hardwood and 5-33/33-80/20-54 in grasses.

Furthermore, there is another variable, which is the lignin extraction process, since it is impossible to isolate it without making chemical changes to its structure. One of the main points affected by the extraction process is the molecular mass of isolated lignin (also called technical lignin), which can be in a very wide range of 260 to 50,000,000 g/mol. The main extraction processes of lignin from lignocellulosic materials are: soda, kraft, sulfite and organosolv.

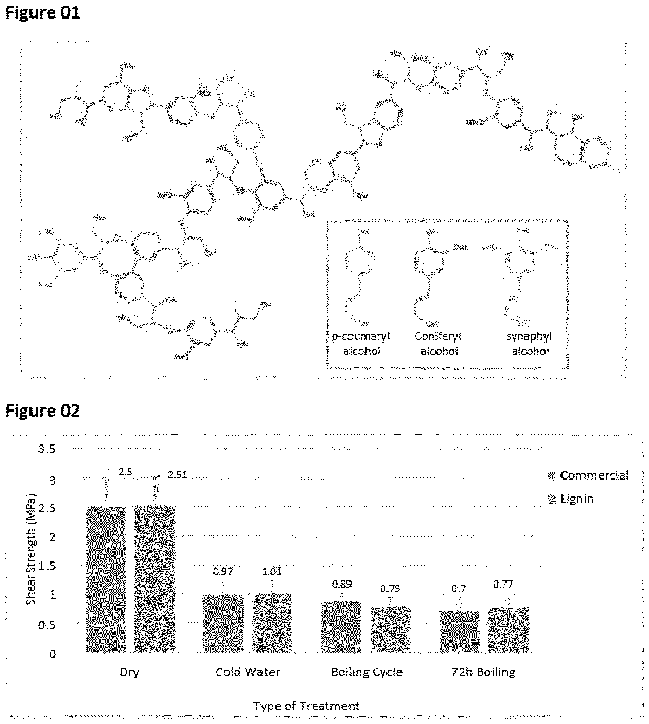

As can be seen, lignin has a very complex chemical structure. There are models that seek to describe it, but it is not fully defined. Figure 1 shows a presumed formula for this.

In one embodiment of the invention, the phenolic resin comprises 0 to 60% of phenol, 30 to 80% of aldehyde, 5 to 60% of lignin, 5 to 20% of base and 1 to 20% of urea.

In one embodiment of the invention, the base is selected from sodium hydroxide, potassium hydroxide, and sodium carbonate. More preferably, the base is sodium hydroxide.

In one embodiment of the invention, the phenolic resin further comprises glycol. In a preferred embodiment of the invention, the phenolic resin comprises 1 to 25% glycol.

In one embodiment of the invention, the phenolic resin has a viscosity of between 400 and 1100 mPa·s (400 and 1100 cP).

In one embodiment of the invention, the phenolic resin has a pH of between 9.0 and 14.0.

In one embodiment of the invention, the phenolic resin has a gel time at 121°C of between 6-11 minutes.

In one embodiment, the phenolic resin of the invention can be used as an adhesive.

In one embodiment of the invention, the adhesive is used on wood substrates.

In one embodiment of the invention, the adhesive is used on wood boards, such as plywood, MDF, MDP and OSB.

The term "MDF" is an acronym used for Medium Density Fiberboard.

The term "MDP" is an acronym used for Medium Density Particleboard.

The term "OSB" is an acronym used for Oriented Strand Board.

The use of the phenolic resin of the invention for application as an adhesive is also disclosed.

In one embodiment of the invention, the use of the phenolic resin of the invention is for application as an adhesive, where the adhesive is for application on wood substrates.

In one embodiment of the invention, the use of the phenolic resin of the invention is for application as an adhesive, wherein the adhesive is used on wood boards, such as plywood, MDF, MDP and OSB.

### EXAMPLES

The examples presented herein are non-exhaustive, and are intended only to illustrate the invention and should not be used as a basis for limiting the same.

Examples 1, 2 and 7 describe processes for the synthesis of resole-type phenolic resins according to the present invention with substitutions of different amounts of lignin. In examples 1 and 7, 30% of phenol was substituted by lignin. In example 2, the amount of phenol substituted by lignin was 25%.

Examples 3, 4 and 8 represent, respectively, descriptions of formulations that were applied in the processes described in examples 1, 2 and 7 and the results of the properties of the resins thus obtained.

Example 5 indicates a comparison between the properties of a commercial phenolic resin (without lignin) and the properties of two phenolic resins obtained according to the synthesis processes of the present invention, wherein one of them was prepared through the first synthesis process with substitution of 30% of phenol by lignin and the other through the second synthesis process with substitution of 100% of phenol by lignin.

Example 6 describes the application of the phenolic resin of the invention.

### Example 1

In this example, a resole-type phenolic resin synthesis process according to the present invention with substitution of 30% of phenol by lignin is described. To obtain a resole-type phenolic resin according to the present invention, the following process can be employed:
a) Mixing 615 grams of the formaldehyde solution, 235 grams of lignin and 539 grams of phenol, and heating the mixture to 50°C until fully homogenized;
b) Adding 150 grams of catalyst (sodium hydroxide) until a temperature of 95°C is reached;
c) Cooling the obtained product to a temperature of 65°C;
d) Adding 200 grams of catalyst (sodium hydroxide) at 65°C;
e) Adding 615 grams of the formaldehyde solution;
f) Keeping the obtained product at a temperature of 95°C until Ford Cup viscosity 4 at 95°C is equal to 15 seconds;
g) Cooling the product to 85°C with addition of 150 grams of water and 50 grams of catalyst (sodium hydroxide);
h) Keeping the temperature at 85°C until Ford Cup 4 viscosity at 85°C is equal to 33 seconds;
i) Adjusting the temperature of the obtained product to 65°C;
j) Adding 100 grams of urea;
k) Cooling the product to 40°C; and
l) Cooling to room temperature.

In this process, aqueous solutions of formaldehyde 37% (w/w) and phenol 90% (w/w), and a formaldehyde/phenol molar ratio of 2.65 were used.

### Example 2

In this example, a resole-type phenolic resin synthesis process according to the present invention is described with substitution of 25% of phenol by lignin. To obtain a resole-type phenolic resin according to the present invention, the following process can be employed:
a) Diluting 460 grams of the formaldehyde solution in 200 grams of water at 50°C;
b) Adding 215 grams of lignin and 585 grams of phenol to the product of step (a) until fully homogenized;
c) Adding 150 grams of catalyst (sodium hydroxide) and heating to 95°C;
d) Cooling the obtained product to a temperature of 65°C;
e) Adding 200 grams of catalyst (sodium hydroxide);
f) Adding 50 grams of the formaldehyde solution, not allowing the temperature to exceed 95°C;
g) Keeping the temperature at 95°C until a Ford 4 Cup viscosity of 15 seconds (measured at this temperature);
h) Adding 255 grams of water and 66 grams of catalyst (sodium hydroxide) to the obtained product;
i) Keeping the temperature at 85°C until a Ford Cup viscosity of 32 seconds is reached;
j) Adjusting the temperature of the obtained product to 65°C;
k) Adding 110 grams of urea; and
l) Cooling the product to below 40°C.

In this process, aqueous solutions of formaldehyde 50% (w/w) and phenol 90% (w/w), and a formaldehyde/phenol molar ratio of 1.80 were used.

### Example 3

This study assesses the properties of the phenolic resin obtained through the process of example 1, in which there was a substitution of 30% of phenol by lignin (first synthesis process of the invention).

The components applied in the phenolic resin synthesis process of the study in question are shown in Table 1 below:

**Table 1**

| Component | Mass (g) |
|---|---|
| Phenol | 539 |
| Lignin | 235 |
| Formaldehyde | 1,230 |
| Sodium hydroxide 50% | 400 |
| Urea | 100 |
| Water | 150 |

Table 2 shows the properties of the phenolic resin obtained through the process of example 1, in which there was a substitution of 30% of phenol by lignin and in which the components were applied in the quantities expressed in Table 1.

**Table 2**

| Property of the obtained resin | Result |
|---|---|
| Brookfield viscosity at 25°C | 680 mPa·s (680 cP) |
| Ford viscosity at 25°C | 126 s |
| pH | 11.9 |
| Alkalinity | 7.7% |
| Solids (105°C/2h) | 51.2% |
| Gel time at 121°C | 6'48" |

The present study concludes that it was possible to synthesize resole-type phenolic resins comprising lignin with properties and features similar to lignin-free resins, which are suitable for application on plywood.

### Example 4

This study assesses the properties of the phenolic resin obtained through the process of example 2, in which there was a substitution of 25% of phenol by lignin.

The components applied in the phenolic resin synthesis process of the study in question are shown in Table 3 below:

**Table 3**

| Components | Mass (g) |
|---|---|
| Phenol | 585 |
| Lignin | 215 |
| Formaldehyde | 910 |
| 50% sodium hydroxide | 416 |
| Urea | 110 |
| Water | 455 |

In Table 4, the properties of the phenolic resin obtained through the process of example 2 are indicated, with substitution of 25% of phenol by lignin, in which the components were applied in the quantities expressed in Table 3.

**Table 4**

| Property of the obtained resin | Result |
|---|---|
| Brookfield viscosity at 25°C | 676 mPa·s (676 cP) |
| pH | 12.9 |
| Alkalinity | 7.4% |
| Solids (105°C/2h) | 50.5% |
| Gel time at 121°C | 7 min |

The results obtained indicate that it was possible to synthesize resole-type phenolic resins comprising lignin with properties and features similar to lignin-free resins, which are suitable for application on plywood.

### Example 5

This study presents a comparison between the properties of a commercial phenolic resin (without lignin) and the properties of two phenolic resins obtained according to the synthesis processes of the present invention, wherein one of them was prepared with substitution of 30% of phenol by lignin (first process) and the other with substitution of 100% of phenol by lignin (second process).

The resins of the present study produced by the processes described herein were characterized by measuring the following physicochemical properties: Brookfield viscosity at 25°C (ISO 2555 standard), gel time (ISO 9396 standard, temperature of 121°C), solids content (weighing 1 gram of material and placing it in an oven at 105°C/2 hours), free formalin (ISO 939 standard) and pH (ISO 8975 standard).

Table 5 presents a comparison of the properties of a (lignin-free) commercial resin and a phenolic resin prepared with substitution of 30% of phenol by lignin and using 50% formalin, according to the phenolic resin synthesis process of the invention.

**Table 5**

| Property | Solids content (%) | Viscosity (mPa·s) or (cP) | pH | Gel time at 121°C (min) |
|---|---|---|---|---|
| Commercial resin | 52.5 | 676 | 12.9 | 6'50" |
| Lignin-containing resin | 50.7 | 868 | 13.3 | 6'08" |

Table 6 presents a comparison of the properties of a (lignin-free) commercial resin and a phenolic resin prepared with substitution of 100% of phenol by lignin and using 50% formalin, according to the phenolic resin synthesis process of the invention.

**Table 6**

| Property | Solids content (%) | Viscosity (mPa·s) or (cP) | pH | Gel time at 121°C (min) |
|---|---|---|---|---|
| Commercial resin | 52.5 | 676 | 12.9 | 6'50" |
| Lignin-containing resin | 49.8 | 559 | 10.3 | 10'40" |

As can be seen from the results presented in the tables above, depending on the amount of phenol substituted by lignin, in mass percentage, resins with different properties are obtained. Thus, for the use of resin in a particular application of interest, it is necessary to know the range of property values desired to be achieved in the final product.

### Example 6

The resins obtained according to the phenolic resin synthesis processes of the present invention and presented in example 3 above were applied in the production of composite phenolic plywood panels with 5 industrial sheets of *Pinus spp.,* with dimensions of 500 mm x 500 mm x 2.0 mm (length, width and thickness, respectively), generating a panel with a nominal thickness of 10 mm. In the formulation, in addition to resin, extender (common wheat flour) and water were used, generating a glue mixture with a solids content of around 30%.

With this adjustment, it was ensured that the amount of resin applied was the same, since they had different solids contents. The parameters used for the production of the panels are shown in Table 7 below.

**Table 7**

| **Parameter** | **Value** |
|---|---|
| **Glue spread** | 360 g/m² double line - 180 g/m² simple line |
| **Temperature** | 140°C |
| **Pressure** | 10 kgf/cm² |
| **Time** | 8 minutes |
| **Assembly time** | 40 minutes |

12.5% of resin by mass was applied, relative to the value of the mass of the *Pinus* sheet, for evaluating mechanical properties.

After pressing, the panels were stored until stabilization. After storing, specimens were made in order to assess the bonding quality by means of the glue line shear strength, according to European standards (CEN - European Committee for Standardization):
- EN 314-1 (2004) - Plywood - Bonding quality -Test methods; and
- EN 314-2 (2002) - Plywood - Bonding quality - Requirements.

The pre-treatments performed on the specimens of the different treatments were:
- Dry (heated);
- Immersion in cold water for 24 hours (20±3°C);
- Boiling for 6 hours (boiling for 6 hours and cooling for 1 hour in water at 20 ± 3°C);
- Boiling cycle (4 hours of boiling; 16 to 20 hours of drying at 60 ± 3°C; 4 hours of boiling; cooling for 1 hour in water at 20 ± 3°C); and
- Boiling for 72 hours (boiling for 72 hours and cooling for 1 hour in water at 20 ± 3°C).

After pre-treatments, the glue line shear strength was determined, as required by the methodology, and the average results can be seen in the chart of Figure 02.

The results obtained were submitted to statistical analysis, using outlier tests, homogeneity of variances, analysis of variance and comparison of Tukey's means, with a confidence level of 95%.

From the results it was possible to verify that the lignin-containing resins of the invention show the same bonding quality as the commercial sample (lignin-free resins) in the different treatments to which they were submitted. As can be seen, the lignin-containing resins of the invention perform similarly to lignin-free resins.

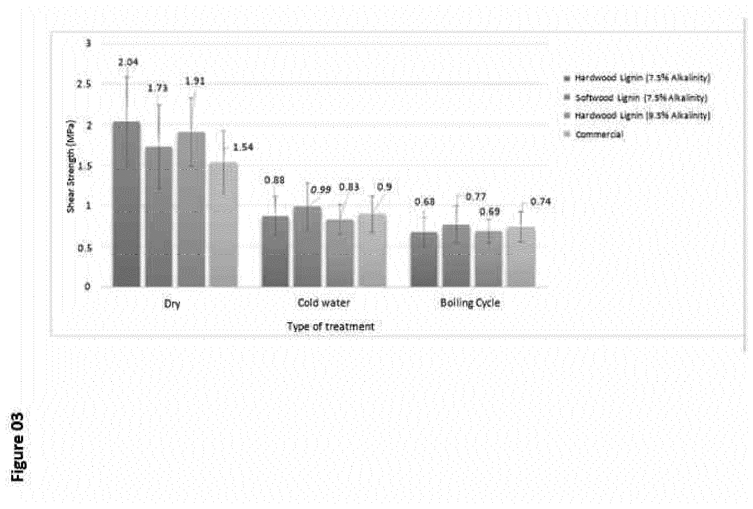

New wooden panels were made using hardwood lignin with alkalinities of 7.5% and 9.5%, softwood lignin with 7.5% alkalinity and commercial lignin, meeting the same conditions as previously described, and the results on mechanical properties are shown in Figure 03. The chart shows the results obtained after submitting a sample of plywood produced with the different resins to the treatments described herein. It can be seen that, by using the resins of the present invention it is possible to obtain performances similar to those obtainable with lignin-free commercial samples.

### Example 7

In this example, a resole-type phenolic resin synthesis process according to the first process of the present invention with substitution of 30% of phenol by lignin is described. To obtain a resole-type phenolic resin according to the first process of the present invention, the following process can be employed:
a) adding 461 grams of phenol, 187 grams of lignin and 187 grams of water;
b) adding 22.5 grams of catalyst (sodium hydroxide);
c) heating to 45°C;
d) adding 900 grams of formalin keeping a temperature between 45-50°C for one hour;
e) heating to 85°C;
f) adding second fraction of catalyst (12 grams of 50% sodium hydroxide);
g) proceeding with the reaction at 85°C until the curing on the plate at 150°C reaches 45-50 seconds;
h) cooling resin to 70°C;
i) adding 75 grams of water and 47 grams of 50% sodium hydroxide;
j) cooling to 50°C and adding urea, keeping for 15 minutes;
k) adding 304 grams of water;
l) cooling to a temperature below 35°C; and
m) unloading the product.

In this process, aqueous solutions of formaldehyde 50% (w/w) and phenol 100% (w/w), and a formaldehyde/phenol molar ratio of 2.4 were used.

The curing times on the plate were determined according to ASTM D4040-6 standard.

The present process, in which the curing time in the plate was monitored instead of the Ford Cup viscosity - as occurred in the processes of Examples 1 and 2 -, also proved viable for obtaining lignophenolic resins, which exhibit acceptable Brookfield viscosity and gel time (transformation from thermoplastic into water-insoluble thermoset) for application to wood.

### Example 8

This study assesses the properties of the phenolic resin obtained through the process of example 7, in which there was a substitution of 30% of phenol by lignin (first synthesis process of the invention).

The components applied in the phenolic resin synthesis process of the study in question are shown in Table 8 below:

**Table 8**

| Component | Mass (g) |
|---|---|
| Phenol | 461 |
| Lignin | 197 |

| Water (1) | 187 |
|---|---|
| 50% Formaldehyde | 900 |
| 50% sodium hydroxide (1) | 22.5 |
| Sodium hydroxide (2) | 12 |
| Water (2) | 75 |
| Sodium hydroxide (3) | 47 |
| Urea | 153 |
| Water (3) | 304 |

Table 9 shows the properties of the phenolic resin obtained through the process of example 7, in which there was a substitution of 30% of phenol by lignin and in which the components were applied in the quantities expressed in Table 8.

**Table 9**

| **Property of the obtained resin** | **Result** |
|---|---|
| Brookfield viscosity at 25°C | 445 mPa·s (445 cP) |
| pH | 10 |
| Solids (105°C/2h) | 52.2% |
| Gel time at 121°C | 8'40" |

From the present study it was concluded that it was possible to synthesize resole-type lignophenolic resins, which exhibit acceptable Brookfield viscosity and gel time (transformation from thermoplastic into water-insoluble thermoset) for application on wood.

## Claims

1. Phenolic resin synthesis process, **characterized in that** it comprises the steps of:
a) mixing phenol, lignin and optionally aldehyde at a temperature range of 25 to 60°C until fully homogenized;
b) adding a catalyst;
c) adding aldehyde until it reaches a temperature of 45 to 95 °C;
d) keeping the obtained product at a temperature of 45 to 95 °C;
e) adding catalyst to the obtained product;
f) keeping the obtained product at a temperature ranging from 45 to 95 °C;
g) adjusting the temperature of the obtained product to 40 to 70 °C;
h) optionally adding a catalyst;
i) adding urea;
j) optionally keeping the obtained product at a temperature of 40 to 70 °C; and
k) cooling to room temperature.

2. Synthesis process according to claim 1, **characterized in that** it further comprises the addition of glycol.

3. Synthesis process according to claim 2, **characterized in that** glycol is added along with the mixture of step (a) or immediately after that step.

4. Synthesis process according to claim 2, **characterized in that** glycol is added at the end of the process.

5. Synthesis process according to claim 2, **characterized in that** a fraction of the total amount of glycol is added along with the mixture of step (a) or immediately after that step and the other fraction of the total amount of glycol is added at the end of the process.

6. Synthesis process according to claims 1 to 5, **characterized in that** it further comprises the addition of water.

7. Synthesis process according to claim 6, **characterized in that** water is added in steps (a), (b), (c), (e), (g), (h), (i) and/or after step (i) and/or (k).

8. Synthesis process according to claim 6 or 7, **characterized in that** when water is added in step (a), 5 to 50% of the total amount of aldehyde added to the process is diluted in 50 to 80% of the total amount of water added to the process.

9. Synthesis process according to claim 8, **characterized in that** the dilution of the aldehyde in step (a) of the phenolic resin synthesis process occurs at a temperature of 50°C.

10. Synthesis process according to any of claims 1 to 9, **characterized in that** step (b) is performed until a temperature of 85 to 95°C is reached.

11. Synthesis process according to claim 10, **characterized in that** a temperature of 90°C is reached in step (b).

12. Synthesis process according to any of claims 1 to 11, **characterized in that** it comprises a step of cooling of the product obtained after step (b) to a temperature of 50 to 75°C, when step (a) comprises aldehyde.

13. Synthesis process according to claim 12, **characterized in that** the product is cooled to a temperature of 65°C.

14. Synthesis process according to claim 12 or 13, **characterized in that** after the cooling step, a catalyst is added until a temperature of 65 to 95°C is reached.

15. Synthesis process according to claim 14, **characterized in that** a catalyst is added until a temperature of 85°C is reached.

16. Synthesis process according to any of claims 1 to 9, **characterized in that** step (b) is performed along with step (a), wherein there is no addition of aldehyde in step (a).

17. Synthesis process according to any of claims 1 to 16, wherein, in step (b) and in the catalyst addition step after cooling the product obtained after step (b), an amount of 15 to 50% of the total amount of catalyst is added.

18. Synthesis process according to any of claims 1 to 17, **characterized in that** a temperature of 85°C is reached in step (c).

19. Synthesis process according to any of claims 1 to 18, **characterized in that** step (c) comprises the addition of 50 to 100% of aldehyde.

20. Synthesis process according to any of claims 1 to 19, **characterized in that** the product obtained in step (c) is kept at a temperature of 85°C.

21. Synthesis process according to any of claims 1 to 20, **characterized in that** in step (d) a Ford 4 Cup viscosity of 10 to 20 seconds is obtained at a temperature of 85°C.

22. Synthesis process according to any of claims 1 to 21, **characterized in that** step (e) comprises adding 20 to 50% of water and 10 to 20% of catalyst, with respect to the total amount of water and catalyst added to the process.

23. Synthesis process according to any of claims 1 to 22, **characterized in that** the catalyst is selected from sodium hydroxide, potassium hydroxide, and sodium carbonate.

24. Synthesis process according to any of claims 1 to 23, **characterized in that** the product obtained in step (e) is kept at a temperature of 85°C.

25. Synthesis process according to any of claims 1 to 24, **characterized in that** in step (f) a Ford 4 Cup viscosity of 25 to 40 seconds is obtained at a temperature of 85°C.

26. Synthesis process according to any of claims 1 to 25, **characterized in that** step (f) is kept under temperature until the curing on the heating plate at 150°C is from 5 to 150 seconds.

27. Synthesis process according to any of claims 1 to 26, **characterized in that** the temperature is adjusted to 65°C in step (g).

28. Synthesis process according to any of claims 1 to 27, **characterized in that** step (i) comprises adding 1 to 20% of urea.

29. Synthesis process according to any of claims 1 to 28, **characterized in that** the phenol/aldehyde molar ratio is 1,0 to 3,5.

30. Synthesis process according to claim 29, **characterized in that** phenol is partially substituted by lignin in mass percentages.

31. Synthesis process according to any of claims 1 to 30, **characterized in that** the aldehyde is selected from formic aldehyde (formaldehyde or formalin), acetaldehyde, glyoxal, furfuraldehyde, propinaldehyde, butyraldehyde, isobutyraldehyde, pentanal and paraformaldehyde.

32. Synthesis process according to claim 31, **characterized in that** the aldehyde is formaldehyde.

33. Synthesis process according to any of claims 1 to 32, **characterized in that** lignin is in the form of powder or cake.

34. Phenolic resin synthesis process, **characterized in that** it comprises the steps of:
a) diluting a catalyst in water, at a temperature range of 25 to 60 °C;
b) adding lignin at a temperature between 20 and 95 °C;
c) cooling the product obtained to a temperature of 50 to 75 °C;
d) adding aldehyde at a temperature of 50 to 85 °C;
e) keeping the obtained product at a temperature of 60 to 95 °C;
f) adding a catalyst;
g) keeping the obtained product at a temperature ranging from 60 to 95 °C;
h) adjusting the temperature of the obtained product to 40 to 70 °C;
i) adding urea;
j) keeping the obtained product at a temperature of 40 to 70 °C; and
k) cooling to room temperature.

35. Synthesis process according to claim 34, **characterized in that** it further comprises the addition of glycol.

36. Synthesis process according to claim 35, **characterized in that** glycol is added after step (a) of the process.

37. Synthesis process according to claim 35, **characterized in that** glycol is added at the end of the process.

38. Synthesis process according to claim 35, **characterized in that** a fraction of the total amount of glycol is added after step (a) and the other fraction of the total amount of glycol is added after step (k).

39. Synthesis process according to any of claims 34 to 38, **characterized in that** the dilution step (a) of the process occurs at a temperature of 50°C.

40. Synthesis process according to any of claims 34 to 39, **characterized in that** step (a) comprises diluting 50 to 90% of the total amount of the catalyst added to the process in 100% of the amount of water added to the process.

41. Synthesis process according to any of claims 34 to 40, **characterized in that** step (b) occurs at a temperature of 60°C.

42. Synthesis process according to any of claims 34 to 41, **characterized in that** the product is cooled in step (c) to a temperature of 65°C.

43. Synthesis process according to any of claims 34 to 42, **characterized in that** aldehyde is added in step (d) at a temperature of 70°C.

44. Synthesis process according to any of claims 34 to 43, **characterized in that** the product obtained in step (d) is kept at a temperature of 85°C.

45. Synthesis process according to any of claims 34 to 44, **characterized in that** in step (e) a Ford 4 Cup viscosity of 15 to 30 seconds is obtained at a temperature of 85°C.

46. Synthesis process according to any of claims 34 to 45, **characterized in that** step (f) comprises adding 10 to 50% of the total amount of catalyst added to the process to the product obtained in step (e).

47. Synthesis process according to any of claims 34 to 46, **characterized in that** the catalyst is selected from sodium hydroxide, potassium hydroxide, and sodium carbonate.

48. Synthesis process according to any of claims 34 to 47, **characterized in that** the product obtained in step (f) is kept at a temperature of 85°C.

49. Synthesis process according to any of claims 34 to 48, **characterized in that** in step (g) a Ford 4 Cup viscosity of 25 to 40 seconds is obtained at a temperature of 85°C.

50. Synthesis process according to any of claims 34 to 49, **characterized in that** the temperature is adjusted to 65°C in step (h).

51. Synthesis process according to any of claims 34 to 50, **characterized in that** step (i) comprises adding 1 to 20% of urea to the product of step (h).

52. Synthesis process according to any of claims 34 to 51, **characterized in that** the aldehyde is selected from formic aldehyde (formaldehyde or formalin), acetaldehyde, glyoxal, furfuraldehyde, propinaldehyde, butyraldehyde, isobutyraldehyde, pentanal and paraformaldehyde.

53. Synthesis process according to claim 52, **characterized in that** the aldehyde is formaldehyde.

54. Synthesis process according to any of claims 34 to 53, **characterized in that** the lignin is in the form of powder or cake.

55. Phenolic resin comprising aldehyde, lignin, a base, urea, and optionally phenol.

56. Phenolic resin according to claim 55, **characterized in that** it comprises 0 to 60% of phenol, 30 to 80% of aldehyde, 5 to 60% of lignin, 5 to 20% of a base and 1 to 20% of urea.

57. Phenolic resin according to claim 55 or 56, **characterized in that** the base is selected from sodium hydroxide, potassium hydroxide, and sodium carbonate.

58. Phenolic resin according to any of claims 55 to 57, **characterized in that** it further comprises glycol.

59. Phenolic resin according to claim 58, **characterized in that** it further comprises 1 to 25% of glycol.

60. Phenolic resin according to any of claims 55 to 59, **characterized in that** it has a viscosity of between 400 and 1100 mPa·s (400 and 1100 cP).

61. Phenolic resin according to any of claims 55 to 60, **characterized in that** it has a pH of between 9.0 and 14.0.

62. Phenolic resin according to any of claims 55 to 61, **characterized in that** it has a gel time of between 6-11 minutes at 121°C.

63. Phenolic resin according to any of claims 55 to 62, **characterized in that** it is used as an adhesive.

64. Phenolic resin according to claim 63, **characterized in that** the adhesive is used on wood substrates.

65. Phenolic resin according to claim 64, **characterized in that** the adhesive is used on wood boards, such as plywood, MDF, MDP and OSB.

66. Use of a phenolic resin as defined in any of claims 55 to 62, **characterized in that** it is for application as an adhesive.

67. Use of a phenolic resin, according to claim 66, **characterized in that** the adhesive is for application on wood substrates.

68. Use of a phenolic resin, according to claim 67, **characterized in that** the adhesive is used on wood boards, such as plywood, MDF, MDP and OSB.

69. Invention of product, process, system, kit or use, **characterized in that** it comprises one or more of the elements described herein.
